# EUROPEAN PATENT APPLICATION

(11) **EP 2 512 131 A1**
(43) Date of publication of application: **17.10.2012**
(21) Application number: 10840612.5
(22) Date of filing: 31.12.2010
(51) Int. Cl.: H04N 7/173

(54) **ADVERTISEMENT PLAYING METHOD, TERMINAL AND MEDIA CONTROLLER**

(30) Priority: 31.12.2009 CN 200910217192
(71) Applicant: Huawei Technologies Co., Ltd., Shenzhen, Guangdong 518129 (CN)
(72) Inventor: SHAO, Gang, Shenzhen Guangdong 518129 (CN); LI, Kepeng, Shenzhen Guangdong 518129 (CN); TAN, Yinyan, Shenzhen Guangdong 518129 (CN); ZHANG, Yuanyuan, Shenzhen Guangdong 518129 (CN); ZHONG, Jieping, Shenzhen Guangdong 518129 (CN)
(74) Representative: Schmitz, Alexander
(86) International application number: PCT/CN2010/080632
(87) International publication number: WO 2011/079825

(57) **Abstract**

The present invention discloses a method for playing an advertisement, a terminal, and a media controller. The method includes: receiving a program on-demand request, and obtaining program identifier information according to the program on-demand request; obtaining advertisement metadata and advertisement play time that correspond to the program identifier information, where the advertisement metadata includes an advertisement identifier of a target advertisement, and the advertisement play time includes first advertisement play time; receiving a first selection result sent by a user, and obtaining, according to the first selection result and the advertisement metadata, a first advertisement identifier of an advertisement that needs to be played for the user; and playing the advertisement corresponding to the first advertisement identifier when the first advertisement play time arrives. Embodiments of the present invention may provide personalized advertisements for users and make the advertisements better targeted and more effective.

## Description

This application claims priority to Chinese Patent Application No. 200910217192.0, filed on December 31, 2009 and entitled "METHOD FOR PLAYING ADVERTISEMENT, TERMINAL AND MEDIA CONTROLLER", which is incorporated herein by reference in its entirety.

### FIELD OF THE INVENTION

The present invention relates to the field of Internet protocol television, and in particular, to a method for playing an advertisement, a terminal, and a media controller.

### BACKGROUND OF THE INVENTION

Internet protocol television (IPTV, Internet Protocol Television) is an emerging television service, and is interactive as compared with a conventional television service. A user may request, according to interest, to play a favorite television program on demand for playing without a specific time limit, and may also watch television programs by means of dragging.

A method for playing an advertisement in an on-demand program of the Internet protocol television is proposed in the prior art. The method mainly includes: Video stitching is performed on content of the advertisement and content of the on-demand program; the stitched video is saved on a media server of a network side; the media server of the network side sends the stitched video to a terminal device in the form of a real-time transport protocol (RTP, Real-time Transport Protocol) stream after receiving a request for playing the on-demand program, where the request for playing the on-demand program is sent by the terminal; and the terminal device starts to play the video including the advertisement.

The prior art has the following disadvantages: The existing method for playing an advertisement fails to make full use of the interactivity and real-time characteristics of the Internet and is unable to provide personalized advertisements for users, and that the advertisements are poorly targeted and ineffective.

### SUMMARY OF THE INVENTION

The present invention provides a method for playing an advertisement, a terminal, and a media controller, which can provide personalized advertisement services for users.

An embodiment of the present invention provides a method for playing an advertisement, where the method includes: receiving a program on-demand request, and obtaining program identifier information according to the program on-demand request;
obtaining advertisement metadata and advertisement play time that correspond to the program identifier information, where the advertisement metadata includes an advertisement identifier of a target advertisement, and the advertisement play time includes first advertisement play time;
receiving a first selection result sent by a user, and obtaining, according to the first selection result and the advertisement metadata, a first advertisement identifier of the advertisement that needs to be played for the user; and
when the first advertisement play time arrives, playing the advertisement corresponding to the first advertisement identifier.

A method for playing an advertisement includes:
receiving a program on-demand request, and obtaining program identifier information according to the program on-demand request;
obtaining advertisement metadata and advertisement play time that correspond to the program identifier information, where the advertisement metadata includes an advertisement identifier of a target advertisement, and the advertisement play time includes first advertisement play time;
when the first advertisement play time arrives, receiving a first selection result sent by a user, and obtaining, according to the first selection result and the advertisement metadata, a first advertisement identifier of the advertisement that needs to be played for the user; and
playing the advertisement corresponding to the first advertisement identifier.

A method for playing an advertisement includes:
receiving a program on-demand request sent by a terminal, and parsing the program on-demand request to obtain an identifier of an on-demand program;
obtaining advertisement metadata and advertisement play time that correspond to the identifier of the on-demand program, where the advertisement metadata includes an advertisement identifier of a target advertisement and a content description of the target advertisement, and the advertisement play time includes first advertisement play time;
sending the advertisement metadata and content interaction indication information to the terminal, so that after receiving the content interaction indication information, the terminal sends a third selection result according to a target advertisement selected by a user;
receiving the third selection result sent by the terminal and parsing the third selection result to obtain a third advertisement identifier of the target advertisement selected by the user; and
when the first advertisement play time arrives, sending an advertisement play request carrying the third advertisement identifier to a media server, so that the media server sends corresponding advertisement content to the terminal according to the third advertisement identifier.

A method for playing an advertisement includes:
receiving a program on-demand request sent by a terminal, and parsing the program on-demand request to obtain an identifier of an on-demand program;
obtaining advertisement metadata and advertisement play time that correspond to the identifier of the on-demand program, where the advertisement metadata includes an advertisement identifier of a target advertisement and a content description of the target advertisement, and the advertisement play time includes first advertisement play time;
when the first advertisement play time arrives, sending the advertisement metadata and content interaction indication information to the terminal, so that after receiving the content interaction indication information, the terminal sends a fifth selection result according to a target advertisement selected by a user;
receiving the fifth selection result sent by the terminal and parsing the fifth selection result to obtain a fifth advertisement identifier of the target advertisement selected by the user; and
sending an advertisement play request carrying the fifth advertisement identifier to a media server, so that the media server sends corresponding advertisement content to the terminal according to the fifth advertisement identifier.

An embodiment of the present invention also provides a terminal, including:
a first receiving unit, configured to receive a program on-demand request, and obtain program identifier information according to the program on-demand request;
a first obtaining unit, configured to obtain advertisement metadata and advertisement play time that correspond to the program identifier information, where the advertisement metadata includes an advertisement identifier of a target advertisement, and the advertisement play time includes first advertisement play time;
a second receiving unit, configured to receive a first selection result sent by a user;
a second obtaining unit, configured to obtain, according to the first selection result and the advertisement metadata, a first advertisement identifier of the advertisement that needs to be played for the user; and
a first playing unit, configured to play the advertisement corresponding to the first advertisement identifier when the first advertisement play time arrives.

A terminal includes:
a third receiving unit, configured to receive a program on-demand request, and obtain program identifier information according to the program on-demand request;
a third obtaining unit, configured to obtain advertisement metadata and advertisement play time that correspond to the program identifier information, where the advertisement metadata includes an advertisement identifier of a target advertisement, and the advertisement play time includes first advertisement play time;
a fourth receiving unit, configured to receive a first selection result sent by a user when the first advertisement play time arrives;
a fourth obtaining unit, configured to obtain, according to the first selection result and the advertisement metadata, a first advertisement identifier of the advertisement that needs to be played for the user; and
a second playing unit, configured to play the advertisement corresponding to the first advertisement identifier when the first advertisement play time arrives.

A media controller includes:
a fifth receiving unit, configured to receive a program on-demand request sent by a terminal, and parse the program on-demand request to obtain an identifier of an on-demand program;
a fifth obtaining unit, configured to obtain advertisement metadata and advertisement play time that correspond to the identifier of the on-demand program, where the advertisement metadata includes an advertisement identifier of a target advertisement and a content description of the target advertisement, and the advertisement play time includes first advertisement play time;
a first interaction indicating unit, configured to send the advertisement metadata and content interaction indication information to the terminal, so that after receiving the content interaction indication information, the terminal sends a third selection result according to a target advertisement selected by a user;
a sixth receiving unit, configured to receive the third selection result sent by the terminal;
a first parsing unit, configured to parse the third selection result to obtain a third advertisement identifier of the target advertisement selected by the user; and
a first play requesting unit, configured to send an advertisement play request carrying the third advertisement identifier to a media server when the first advertisement play time arrives, so that the media server sends corresponding advertisement content to the terminal according to the third advertisement identifier.

A media controller includes:
a seventh receiving unit, configured to receive a program on-demand request sent by a terminal, and parse the program on-demand request to obtain an identifier of an on-demand program;
a seventh obtaining unit, configured to obtain advertisement metadata and advertisement play time that correspond to the identifier of the on-demand program, where the advertisement metadata includes an advertisement identifier of a target advertisement and a content description of the target advertisement, and the advertisement play time includes first advertisement play time;
a second interaction indicating unit, configured to send the advertisement metadata and content interaction indication information to the terminal when the first advertisement play time arrives, so that after receiving the content interaction indication information, the terminal sends a fifth selection result according to a target advertisement selected by a user;
an eighth receiving unit, configured to receive the fifth selection result sent by the terminal;
a second parsing unit, configured to parse the fifth selection result to obtain a fifth advertisement identifier of the target advertisement selected by the user; and
a second play requesting unit, configured to send an advertisement play request carrying the fifth advertisement identifier to a media server, so that the media server sends corresponding advertisement content to the terminal according to the fifth advertisement identifier.

In the embodiments of the present invention, the terminal may obtain, according to the first selection result of the user, the first advertisement identifier of the advertisement that needs to be played for the user, and thus play, according to the first advertisement identifier, the advertisement that needs to be played for the user. According to the embodiments of the present invention, the user is enabled to select favorite advertisements for playing, the interactivity and real-time characteristics of the Internet are made full use of, personalized advertisements may be provided for the user, and the advertisements are better targeted and more effective.

### BRIEF DESCRIPTION OF THE DRAWINGS

To make the technical solutions of the embodiments of the present invention clearer, accompanying drawings used in the description of the embodiments are briefly described below. Evidently, the accompanying drawings are only some embodiments of the present invention, and persons of ordinary skill in the art may further obtain other drawings according to these accompanying drawings without creative efforts.
FIG. 1 is a flowchart of a first embodiment of a method for playing an advertisement according to an embodiment of the present invention;
FIG. 2 is a flowchart of a second embodiment of a method for playing an advertisement according to an embodiment of the present invention;
FIG. 3 is a flowchart of a method for playing an advertisement corresponding to a first advertisement identifier according to an embodiment of the present invention;
FIG. 4 is a flowchart of a third embodiment of a method for playing an advertisement according to the present invention;
FIG. 5 is a flowchart of a method for playing a target advertisement in advance in the method for playing an advertisement according to an embodiment of the present invention;
FIG. 6 is a flowchart of a fourth embodiment of a method for playing an advertisement according to an embodiment of the present invention;
FIG. 7 is a flowchart of a fifth embodiment of a method for playing an advertisement according to an embodiment of the present invention;
FIG. 8 is a flowchart of a sixth embodiment of a method for playing an advertisement according to an embodiment of the present invention;
FIG. 9 is a flowchart of another method for playing a target advertisement in advance in the method for playing an advertisement according to an embodiment of the present invention;
FIG. 10A and FIG. 10B are a flowchart of a seventh embodiment of a method for playing an advertisement according to an embodiment of the present invention;
FIG. 11 is a schematic diagram of a first embodiment of a terminal according to an embodiment of the present invention;
FIG. 12 is a schematic diagram of a second obtaining unit in the terminal according to the embodiment of the present invention;
FIG. 13 is a schematic diagram of a first playing unit in the terminal according to the embodiment of the present invention;
FIG. 14 is a schematic diagram of a second embodiment of a terminal according to an embodiment of the present invention;
FIG. 15 is a schematic diagram of a first embodiment of a media controller according to an embodiment of the present invention; and
FIG. 16 is a schematic diagram of a second embodiment of a media controller according to an embodiment of the present invention.

### DETAILED DESCRIPTION OF THE EMBODIMENTS

The present invention provides a method for playing an advertisement, a terminal, and a media controller. To help better understand the technical solutions of the present invention, the embodiments of the present invention are described in detail below with reference to the accompanying drawings.

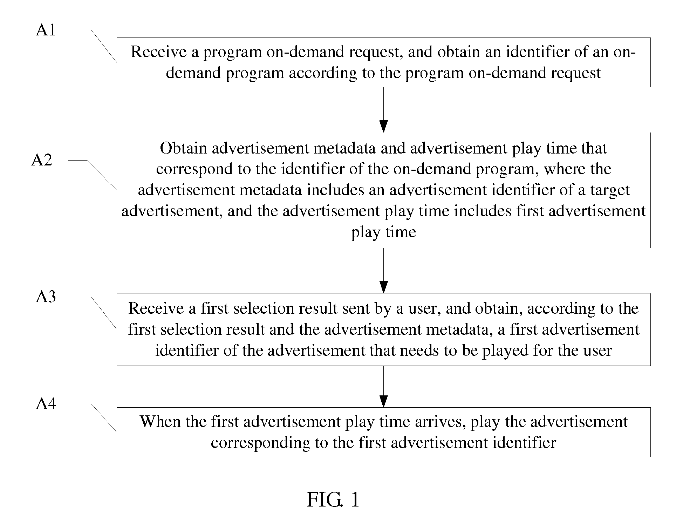

Referring to FIG. 1, FIG. 1 is a flowchart of a first embodiment of a method for playing an advertisement according to an embodiment of the present invention.

In this embodiment of the present invention, a user may select, according to prompts on an operation interface, a program to be watched, and send a program on-demand request to a terminal. The first embodiment of the method for playing an advertisement according to the present invention may include:
Step A1: Receive a program on-demand request, and obtain an identifier of an on-demand program according to the program on-demand request.

Specifically, a terminal receives the program on-demand request sent by a user, and obtains the identifier of the on-demand program according to the program on-demand request.

Step A2: Obtain advertisement metadata and advertisement play time that correspond to the identifier of the on-demand program, where the advertisement metadata includes an advertisement identifier of a target advertisement, and the advertisement play time includes first advertisement play time.

Specifically, the terminal may obtain, according to the identifier of the on-demand program, the advertisement metadata and the advertisement play time that correspond to the identifier of the on-demand program. The advertisement metadata may include an advertisement identifier of the target advertisement and a content description of the target advertisement, and the advertisement play time includes first advertisement play time.

In this embodiment of the present invention, the terminal may pre-store the advertisement metadata and the advertisement play time locally, and the terminal may query and obtain, according to the identifier of the on-demand program, the advertisement metadata and the advertisement play time that correspond to the identifier of the on-demand program. In addition, the terminal may also send a request for the advertisement metadata to an advertisement server (Ad Server, Advertisement Server) or an electronic program guide server (EPG Server, Electronic Program Guide Server), where the request for the advertisement metadata carries the identifier of the on-demand program. The ad server or the electronic program guide server returns the advertisement metadata and the advertisement play time according to the request for the advertisement metadata. The terminal receives the advertisement metadata and the advertisement play time that are sent by the ad server or the electronic program guide server.

Step A3: Receive a first selection result sent by the user, and obtain, according to the first selection result and the advertisement metadata, a first advertisement identifier of the advertisement that needs to be played for the user.

Specifically, the terminal may receive the first selection result that is sent by the user and about the advertisement for the program, and the terminal obtains, according to the selection result of the user and the advertisement metadata, the first advertisement identifier of the advertisement that needs to be played for the user. The first selection result sent by the user may be a specific advertisement selected by the user, or the first selection result may also be advertisement content selected by the user, such as an advertisement for sports goods or an automobile-related advertisement. The first advertisement identifier may be a set, and include multiple advertisement identifiers which are used for identifying the advertisements selected by the user.

The content description of the target advertisement may include information about the target advertisement, such as a text description, a category of the advertisement content (such as an automobile or cosmetics category), a keyword description of the advertisement content, and/or a screenshot for the advertisement.

Step A4: When the first advertisement play time arrives, play the advertisement corresponding to the first advertisement identifier.

Specifically, the terminal may query the advertisement corresponding to the first advertisement identifier locally when the first advertisement play time arrives, thus playing the advertisement corresponding to the first advertisement identifier.

In this embodiment of the present invention, the terminal may obtain, according to the first selection result of the user, the first advertisement identifier of the advertisement that needs to be played for the user, and thus play, according to the first advertisement identifier, the advertisement that needs to be played for the user. According to this embodiment of the present invention, the user is enabled to select favorite advertisements for playing, the interactivity and real-time characteristics of the Internet are made full use of, personalized advertisements may be provided for the user, and the advertisements are better targeted and more effective.

In this embodiment of the present invention, the advertisement metadata received by the terminal may also include a content description of the target advertisement, where the advertisement identifier of the target advertisement corresponds to the content description of the target advertisement. Before receiving the first selection result sent by the user (step A3), the terminal may present the content description of the target advertisement to the user through an interactive interface, so that the user sends the first selection result according to the content description of the target advertisement. At this time, the first selection result includes the selection result of the user for the content description of the target advertisement. The terminal obtains the first advertisement identifier according to the selection result of the user for the target advertisement and the advertisement metadata.

In this embodiment of the present invention, the advertisement metadata received by the terminal may also include a content description of the target advertisement, where the advertisement identifier of the target advertisement corresponds to the content description of the target advertisement. In the foregoing step A3, the step of obtaining, by the terminal and according to the first selection result and the advertisement metadata, the first advertisement identifier of the advertisement that needs to be played for the user may include: parsing the first selection result to obtain advertisement play indication information of the user; and selecting, in the advertisement metadata, the first advertisement identifier of the advertisement corresponding to the advertisement play indication information. The advertisement play indication information may be an advertisement preference of the user, such as a preference of the user for an automobile-related advertisement or a preference of the user for a shorter advertisement. The terminal may automatically select the first advertisement identifier of the corresponding advertisement from the advertisement metadata according to the user preference.

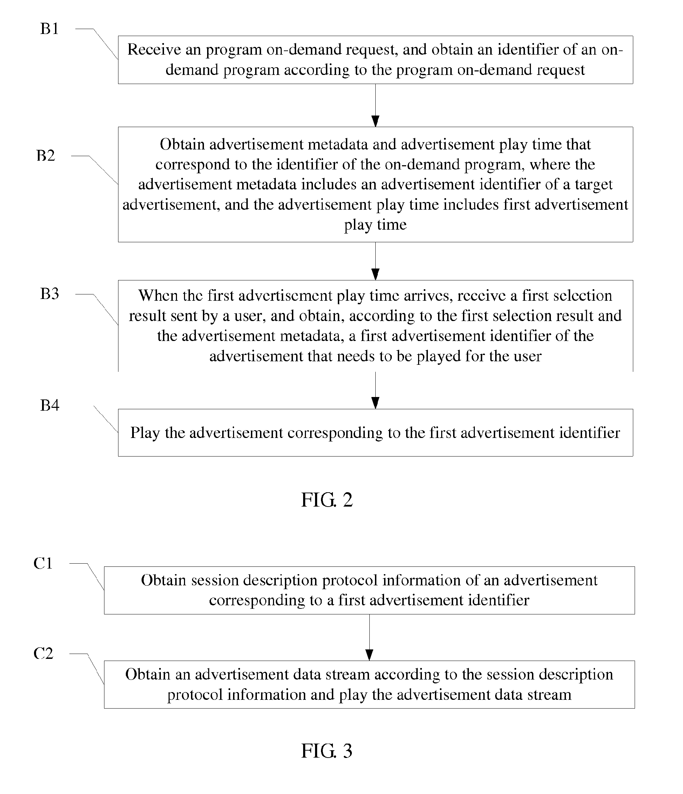

Referring to FIG. 2, FIG. 2 is a flowchart of a second embodiment of a method for playing an advertisement according to an embodiment of the present invention.

In this embodiment of the present invention, the user may select, according to prompts on an operation interface, a program to be watched. The second embodiment of the method for playing an advertisement may include:
Step B1: Receive a program on-demand request, and obtain an identifier of an on-demand program according to the program on-demand request.
Step B2: Obtain advertisement metadata and advertisement play time that correspond to the identifier of the on-demand program, where the advertisement metadata includes an advertisement identifier of a target advertisement, and the advertisement play time includes first advertisement play time.

In this embodiment of the present invention, for executing processes of step B1 and step B2 and the method for playing an advertisement, reference may be made to step A1 and step A2 in the first embodiment, and details are not repeatedly described here.

Step B3: When the first advertisement play time arrives, receive a first selection result sent by the user, and obtain, according to the first selection result and the advertisement metadata, a first advertisement identifier of the advertisement that needs to be played for the user.

Specifically, when the first advertisement play time arrives, the terminal may receive the first selection result that is sent by the user and about the advertisement for the program, and the terminal obtains, according to the selection result of the user and the advertisement metadata, the first advertisement identifier of the advertisement that needs to be played for the user. The first selection result sent by the user may be a specific advertisement selected by the user, or the first selection result may also be advertisement content selected by the user, such as an advertisement for sports goods or an automobile-related advertisement. The first advertisement identifier may be a set, and include multiple advertisement identifiers which are used for identifying the advertisements selected by the user.

Step B4: Play the advertisement corresponding to the first advertisement identifier.

Specifically, the terminal may query the advertisement corresponding to the first advertisement identifier locally when the first advertisement play time arrives, thus playing the advertisement corresponding to the first advertisement identifier.

In this embodiment of the present invention, the terminal may obtain, according to the first selection result of the user, the first advertisement identifier of the advertisement that needs to be played for the user, and thus play the advertisement that needs to be played for the user. According to this embodiment of the present invention, the user is enabled to select favorite advertisements for playing, the interactivity and real-time characteristics of the Internet are made full use of, personalized advertisements are provided for the user, and the advertisements are better targeted and more effective.

Referring to FIG. 3, FIG. 3 is a flowchart of a method for playing an advertisement corresponding to a first advertisement identifier according to an embodiment of the present invention.

In this embodiment of the present invention, the process for the terminal to play the advertisement corresponding to the first advertisement identifier may include:
Step C1: Obtain session description protocol information of an advertisement corresponding to a first advertisement identifier.

Specifically, the terminal may query the session description protocol (SDP, Session Description Protocol) information corresponding to the first advertisement identifier from advertisement metadata. Certainly, the terminal may also query the session description protocol information corresponding to the first advertisement identifier from an ad server.

Step C2: Obtain an advertisement data stream according to the session description protocol information and play the advertisement data stream.

Specifically, the terminal may obtain the advertisement data stream from a media server according to the session description protocol information, and play the advertisement data stream to the user. While playing the advertisement data stream, the terminal may also limit the fast forward operation of the user.

According to this embodiment of the present invention, the advertisement data stream is requested from the media server to play the target advertisement, and the advertisement data stream may be sent to a responding terminal according to requirements, without sending data of all target advertisements to the terminal, thus saving traffic of a network.

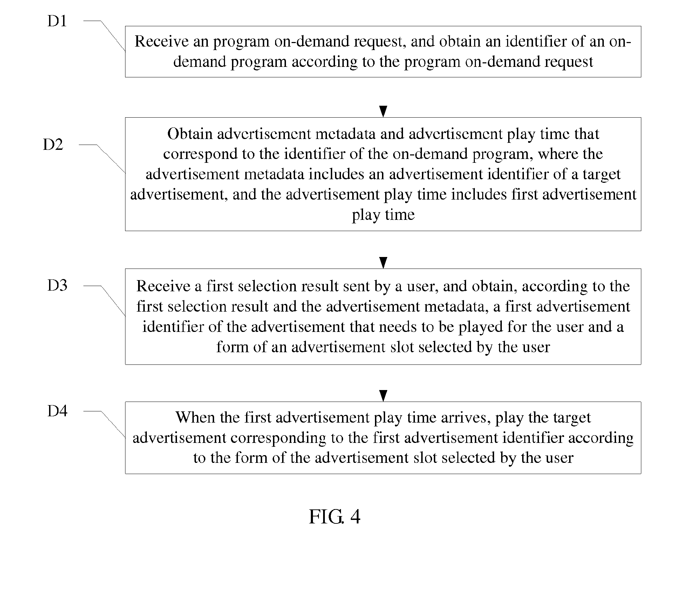

Referring to FIG. 4, FIG. 4 is a flowchart of a third embodiment of a method for playing an advertisement according to the present invention.

In this embodiment of the present invention, a user may select, according to prompts on an operation interface, a program to be watched, and send a program on-demand request to a terminal. The third embodiment of the method for playing an advertisement may include:
Step D1: Receive a program on-demand request, and obtain an identifier of an on-demand program according to the program on-demand request.
Step D2: Obtain advertisement metadata and advertisement play time that correspond to the identifier of the on-demand program, where the advertisement metadata includes an advertisement identifier of a target advertisement, and the advertisement play time includes first advertisement play time.

In this embodiment of the present invention, for executing processes of step D1 and step D2 and the method for playing an advertisement, reference may be made to the executing processes of step A1 and step A2 in the first embodiment, and details are not repeatedly described here.

Step D3: Receive a first selection result sent by the user, and obtain, according to the first selection result and the advertisement metadata, a first advertisement identifier of the advertisement that needs to be played for the user and a form of an advertisement slot selected by the user.

Specifically, the first selection result sent by the user may include a selection result for advertisement content and a selection result for the form of the advertisement slot. The form of the advertisement slot includes a long advertisement slot and a short advertisement slot, where the long advertisement slot means that multiple advertisements are played consecutively in the same advertisement slot, while the short advertisement slot means that multiple advertisements are played separately in different advertisement slots. The terminal obtains, according to the first selection result and the advertisement metadata, the first advertisement identifier of the advertisement that needs to be played for the user and the form of the advertisement slot selected by the user.

The terminal may present the forms of advertisement slots and the content descriptions of the advertisements to the user through an interactive interface, so that the user sends the first selection result according to the forms of advertisement slots that are available for selection. The terminal may also obtain through matching, according to a user preference set by the user, a form of an advertisement slot, where the form of the advertisement slot matches the user preference from the advertisement metadata.

Step D4: When the first advertisement play time arrives, play the target advertisement corresponding to the first advertisement identifier according to the form of the advertisement slot selected by the user.

Specifically, the terminal may play the target advertisement corresponding to the first advertisement identifier according to the form of the advertisement slot selected by the user. For example, if the advertisement slot selected by the user is a long advertisement slot, the terminal plays the target advertisement corresponding to the first advertisement identifier consecutively in the same advertisement slot when the first advertisement play time arrives.

According to this embodiment of the present invention, the target advertisement selected by the user may be played according to the form of the advertisement slot selected by the user, requirements of different users may be met, personalized advertisements may be provided for the user, and the advertisements are better targeted and more effective.

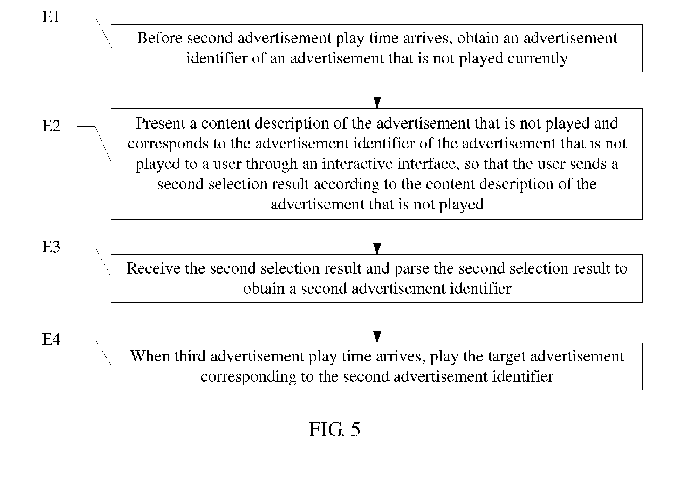

Referring to FIG. 5, FIG. 5 is a flowchart of a method for playing a target advertisement in advance according to an embodiment of the present invention.

In this embodiment of the present invention, advertisement play time also includes second advertisement play time. According to this embodiment of the present invention, the method for a terminal to play the target advertisement in advance according to the embodiment of the present invention mainly includes:

Step E1: Before second advertisement play time arrives, obtain an advertisement identifier of an advertisement that is not played currently.

In this embodiment of the present invention, advertisement play time corresponds to multiple advertisement identifiers which are used for indicating advertisement identifiers of target advertisements to be played when the advertisement play time arrives. Before the second advertisement play time arrives, the terminal may obtain in real time the advertisement identifier of the advertisement that is not played currently.

Step E2: Present a content description of the advertisement that is not played and corresponds to the advertisement identifier of the advertisement that is not played to a user through an interactive interface, so that the user sends a second selection result according to the content description of the advertisement that is not played.

Step E3: Receive the second selection result and parse the second selection result to obtain a second advertisement identifier.

Specifically, the terminal may parse the second selection result to obtain the second advertisement identifier and third advertisement play time, where the second advertisement identifier is used for identifying a target advertisement that needs to be played for the user in advance, and the third advertisement play time is used for indicating time when the advertisement is to be played for the user in advance.

Step E4: When the third advertisement play time arrives, play the target advertisement corresponding to the second advertisement identifier.

Specifically, the terminal may play the target advertisement corresponding to the second advertisement identifier when the third advertisement play time arrives, thus playing the advertisement selected by the user in advance. It should be pointed out that the third advertisement play time selected by the terminal may be the second advertisement play time. At this time, the terminal starts to play the advertisement selected by the user when the second advertisement play time arrives. In addition, the user may not feed back the third advertisement play time, and the terminal automatically plays the advertisement selected by the user when the next advertisement play time arrives.

According to this embodiment of the present invention, playing sequence of the advertisements may be adjusted according to the selection of the user, and thus personalized requirements of the user may be better met, and the advertisements are better targeted and more effective.

The method for playing an advertisement according to the embodiments of the present invention is described below with reference to a specific application scenario.

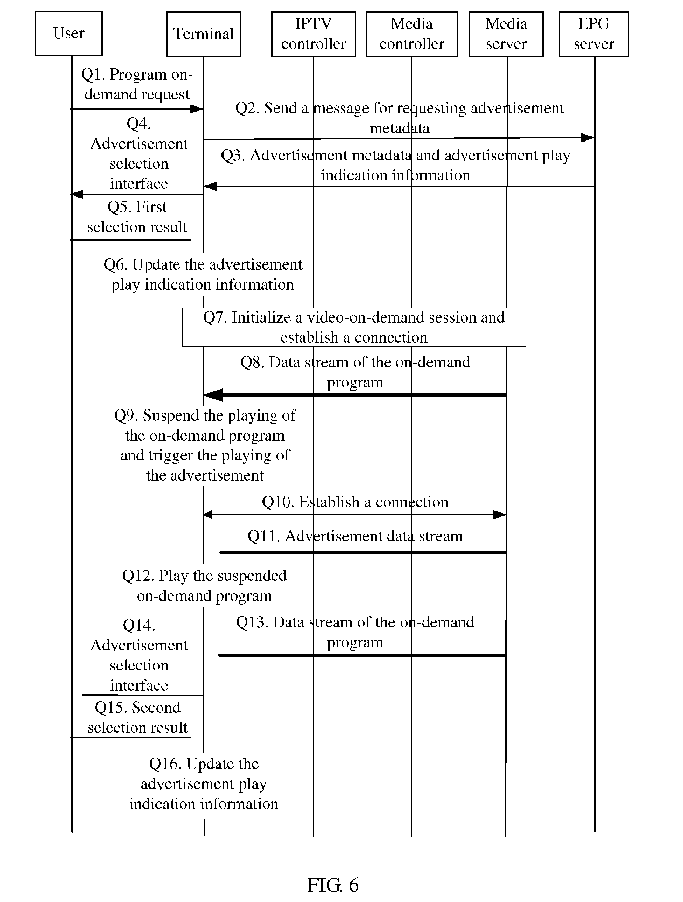

In this application scenario, a video-on-demand system mainly includes: a terminal, an IPTV controller (IPTV Control), a media controller, a media server, an ad server, and an electronic program guide server (EPG Server). In this embodiment of the present invention, the terminal may implement an open IPTV terminal function (OTIF, Open IPTV Terminal Function), and the media controller may include a content delivery network controller (CDNC, Content Delivery Network Controller) and a cluster controller (CC, Cluster Controller). Reference may be made to FIG. 6 for a procedure of a fourth embodiment of the method for playing an advertisement, which may specifically include the following steps:
Step Q1: Receive a program on-demand request from a user.

A terminal may receive the program on-demand request sent by the user through a remote controller, and obtain an identifier of an on-demand program according to the program on-demand request.

Steps Q2 to Q3: The terminal sends a message for requesting advertisement metadata, and receives the advertisement metadata and advertisement play indication information.

Specifically, the terminal may send the message for requesting the advertisement metadata to the EPG Server, where the message for requesting the advertisement metadata carries the identifier of the on-demand program, and the EPG Server finds locally, according to the identifier of the on-demand program, the advertisement metadata and the advertisement play indication information that correspond to the current identifier of the on-demand program, and returns the advertisement metadata and the advertisement play indication information. In this embodiment of the present invention, the advertisement play indication information includes advertisement play time, a form of an advertisement slot and an advertisement identifier of the target advertisement to be played and a content description of the target advertisement to be played when the advertisement play time arrives, where the advertisement play time may include first advertisement play time and second advertisement play time.

If the EPG Server cannot find locally the advertisement metadata and the advertisement play indication information that correspond to the identifier of the on-demand program, the EPG Server may request the advertisement metadata and the advertisement play indication information from the ad server, and after obtaining the advertisement metadata and the advertisement play indication information that correspond to the identifier of the on-demand program, send the advertisement metadata and the advertisement play indication information to a user equipment.

The terminal may also send a message for requesting advertisement metadata to the ad server, where the message for requesting the advertisement metadata carries the identifier of the on-demand program, and the ad server finds locally, according to the identifier of the on-demand program, the advertisement metadata and the advertisement play indication information that correspond to the current identifier of the on-demand program, and returns the advertisement metadata and the advertisement play indication information.

In addition, the terminal may also request the IPTV Controthrough the EPG Server, and the IPTV Control performs a search locally. If the advertisement metadata and the advertisement play indication information are available, the IPTV Control returns the advertisement metadata and the advertisement play indication information; otherwise, the requests the advertisement metadata and the advertisement play indication information from the ad server.

The advertisement metadata may also include interaction control information, such as control indication information before playing or control indication information during playing. In this embodiment of the present invention, the advertisement metadata includes the control indication information before playing, which indicates that before playing the on-demand program, the user needs to select the target advertisement to be played. At this time, the terminal executes step Q4.

Steps Q4 to Q5: Interact through an advertisement interface, and receive a first selection result.

Specifically, the terminal may present a content description of an advertisement available for selection and a form of an advertisement slot available for selection to the user through an interactive interface, so that the user sends the first selection result according to the form of the advertisement slot available for selection and the content description of the advertisement available for selection, where the first selection result includes a selection result for an advertisement and a selection result for a form of an advertisement slot. The terminal may parse the first selection result to obtain a first advertisement identifier of the target advertisement selected by the user and the user's selection result for the form of the advertisement slot.

In addition, the terminal may also filter the content description of the target advertisements and parameters for the forms of advertisement slots according to filter conditions of an option filtering module, and then select a suitable advertisement content description for interaction or directly return the selection result. The filter conditions may be a preference setting of the user, for example, the advertisement content preferred by the user is "automobile", and the target advertisements may be filtered according to the preference of the user. The terminal may also save all options of this interaction and the user's selection result for subsequent charging.

In addition, the terminal may also automatically match, according to the user preference, an advertisement corresponding to the user preference from the advertisement metadata, thus obtaining the first advertisement identifier.

Step Q6: Update the advertisement play indication information.

Specifically, the terminal may update the advertisement identifier in the advertisement play indication information to the first advertisement identifier, and update the form of the advertisement slot in the advertisement play indication information to the form of the advertisement slot selected by the user, and the terminal plays the advertisement according to the updated advertisement play indication information.

Steps Q7 to Q8: Play the on-demand program.

Specifically, after receiving the first selection result of the user, the terminal starts the process of initializing a video-on-demand session with the media server, and the terminal establishes a connection with the media server to play content of the on-demand program and triggers the playing of the advertisement when the advertisement play time arrives.

Step Q9: Suspend the playing of the on-demand program and trigger the playing of the advertisement.

Specifically, when the playing of the content proceeds to the first advertisement play time in the advertisement play indication information, the terminal suspends the current playing of the on-demand program and triggers the playing of the advertisement, and step Q10 starts to be executed.

Steps Q10 to Q11: The terminal establishes a connection with the media server and plays an advertisement data stream.

Specifically, the terminal obtains the advertisement identifier of the target advertisement to be played when the first advertisement play time arrives, and obtains, according to the advertisement identifier, session description protocol information of the target advertisement to be played currently. In this application scenario, when the first advertisement play time arrives, the advertisement identifier of the target advertisement to be played is the first advertisement identifier.

The terminal may send a connection request to the media server according to the session description protocol information, where the connection request is forwarded by the media controller to the media server; the media server sends the advertisement data stream to the terminal after receiving the connection request; and the terminal plays the advertisement data stream for the user. The advertisement data stream may be sent by the real time streaming protocol (RTSP, Real Time Streaming Protocol).

Steps Q12 to Q13: The terminal resumes the playing of the suspended on-demand program.

After the playing of an advertisement content stream ends, the terminal continues to play the content of the on-demand program from a time point at which the program content is suspended.

Steps Q14 to Q15: Interact through the advertisement interface, and send a second selection result.

Specifically, before the second advertisement play time arrives, the terminal may obtain, in real time and according to the advertisement play indication information, the advertisement identifier of the target advertisement corresponding to the un-triggered advertisement play time in the advertisement play indication information, and present a content description of an advertisement that is not played to the user though the interactive interface.

The user selects, according to the content description of the advertisement, where the content description of the advertisement is presented on the interactive interface, the second advertisement identifier to be played in advance and third advertisement play time, and sends the second selection result. The terminal receives the second selection result, and parses the second selection result to obtain the second advertisement identifier of the target advertisement selected by the user and the third advertisement play time. At this time, the third advertisement play time is time for playing in advance. Certainly, the time for playing in advance may also be set to default, for example, the advertisement to be played in advance is played when the next advertisement play time arrives.

Step Q16: Update the advertisement play indication information.

Specifically, the terminal may update the advertisement play indication information, and play the advertisement by changing the advertisement play time corresponding to the second advertisement identifier to the third advertisement play time, or by deleting the second advertisement identifier from the advertisement played during the advertisement play time corresponding to the second advertisement identifier, and adding the third advertisement play time at specified time, where the advertisement content corresponding to the third advertisement play time is the advertisement content corresponding to the second advertisement identifier.

This embodiment of the present invention may play, according to the selection of the user, the target advertisement selected by the user, and may also adjust playing sequence of the target advertisement according to the user's selection, which can better meet personalized requirements of the user and make the advertisements better targeted and more effective.

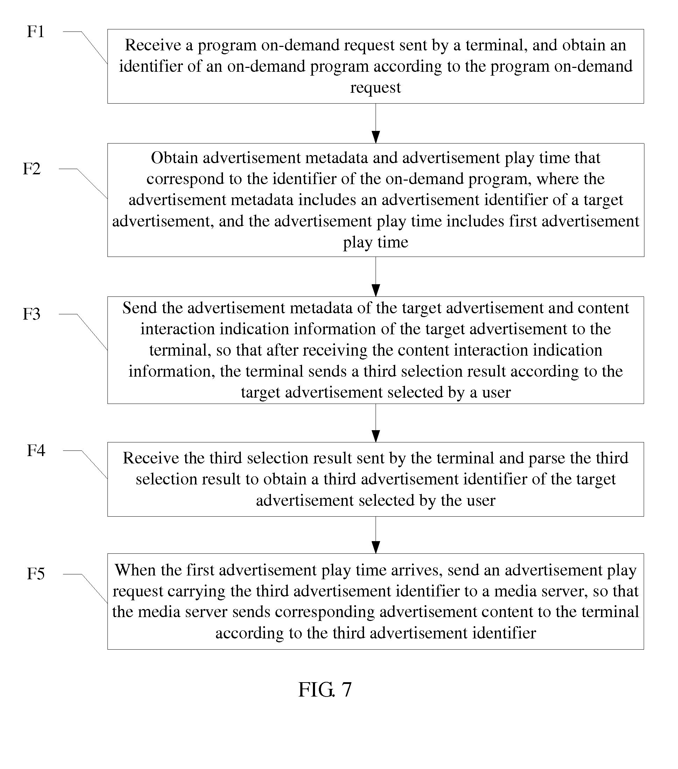

Referring to FIG. 7, FIG. 7 is a flowchart of a fifth embodiment of a method for playing an advertisement according to the present invention.

In this embodiment of the present invention, playing of an advertisement is controlled mainly by a media controller in a video-on-demand system. A user may select, according to an operation interface provided by a terminal, a program to be watched, and send a program on-demand request. A process for the media controller to control the playing of the advertisement may include:
Step F1: Receive a program on-demand request sent by a terminal, and obtain an identifier of an on-demand program according to the program on-demand request.

Specifically, a media controller may receive the program on-demand request sent by the terminal, where the program on-demand request may carry the identifier of the on-demand program.

Step F2: Obtain advertisement metadata and advertisement play time that correspond to the identifier of the on-demand program. The advertisement metadata includes an advertisement identifier of a target advertisement and a content description of the target advertisement, and the advertisement play time includes first advertisement play time.

Specifically, the advertisement metadata includes an advertisement identifier of the target advertisement and a content description of the target advertisement corresponding to the advertisement identifier of the target advertisement. The media controller may locally query and obtain, according to the identifier of the on-demand program, the advertisement metadata and advertisement play indication information that correspond to the identifier of the on-demand program. Additionally, the terminal may also send a request for the advertisement metadata to an ad server or an electronic program guide server, and the terminal receives the advertisement metadata and the advertisement play time that are sent by the ad server or the electronic program guide server.

Step F3: Send the advertisement metadata of the target advertisement and content interaction indication information of the target advertisement to the terminal, so that after receiving the content interaction indication information, the terminal sends a third selection result according to the target advertisement selected by the user.

Specifically, the media controller may send the advertisement metadata of the target advertisement and the content interaction indication information of the target advertisement to the terminal through a session initiation protocol message (SIP message, Session Initiation Protocol message).

After receiving the content interaction indication information, the terminal may present the content description of the target advertisement to the user through an interactive interface, so that the user selects, according to the content description of the target advertisement, the target advertisement to be played, and sends the third selection result. At this time, the terminal may query the advertisement metadata according to the third selection result of the user to obtain a third advertisement identifier of the target advertisement that needs to be played for the user.

In addition, the terminal may automatically match a corresponding target advertisement from the advertisement metadata according to the advertisement play indication information of the user to complete the selection of the advertisement content, and send the third selection result according to the selection. The advertisement play indication information of the user may be user preference set by the user, for example, the user prefers automobile-related advertisements. The terminal may match from the advertisement metadata an advertisements whose content description includes automobile, thus obtaining the target advertisement that needs to be played for the user, and send the third selection result to the media controller, where the third selection result may be the content description of the advertisement selected by the user, or the advertisement identifier of the target advertisement selected by the user.

Step F4: Receive the third selection result sent by the terminal and parse the third selection result to obtain a third advertisement identifier of the target advertisement selected by the user.

Specifically, the media controller may receive the third selection result sent by the user, and parse the third selection result to obtain the third advertisement identifier of the target advertisement that needs to be played for the user. The third advertisement identifier may be a set, and may include multiple advertisement identifiers which are used for identifying the target advertisements selected by the user for playing.

Step F5: When the first advertisement play time arrives, send an advertisement play request carrying the third advertisement identifier to a media server, so that the media server sends corresponding advertisement content to the terminal according to the third advertisement identifier.

Specifically, the media controller may send an advertisement play request to the media server when the first advertisement play time arrives, where the advertisement play request carries the third advertisement identifier of the target advertisement to be played currently. The media server starts to establish a connection with the terminal, and sends the advertisement content corresponding to the third advertisement identifier to the terminal by means of a data stream, and thus the terminal may play the target advertisement selected by the user for the user.

In this embodiment of the present invention, the media controller controls the terminal to play a corresponding advertisement according to the selection result of the user. According to this embodiment of the present invention, the user is enabled to select favorite advertisements for playing, the interactivity and real-time characteristics of the Internet are made full use of, personalized advertisements may be provided for the user, and the advertisements are better targeted and more effective.

In this embodiment of the present invention, the user may select a desired form of an advertisement slot, and the form of the advertisement slot may include a long advertisement slot and a short advertisement slot, where the long advertisement slot means that multiple advertisements are played consecutively in the same advertisement slot, while the short advertisement slot means that multiple advertisements are played separately in different advertisement slots. At this time, the third selection result received by the media controller includes a selection result for the form of the advertisement slot, and the media controller parses the third selection result to obtain the selection result for the form of the advertisement slot and the third advertisement identifier of the target advertisement that needs to be played for the user. The media controller sends an advertisement play request carrying the third advertisement identifier to the media server according to the selection result for the form of the advertisement. For example, if the advertisement slot selected by the user is a long advertisement slot, when the first advertisement play time arrives, the media controller sends all advertisement identifiers in the first advertisement identifier to the media server consecutively, so that the media server consecutively sends the advertisement contents corresponding to the first advertisement identifier to the terminal, and thus the terminal may consecutively play the advertisement contents corresponding to the first advertisement identifier in the same advertisement slot.

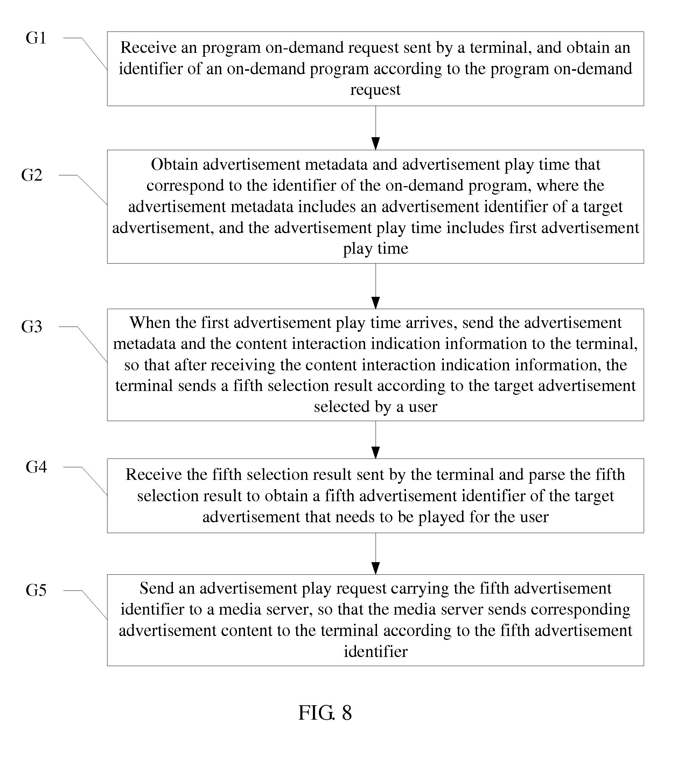

Referring to FIG. 8, FIG. 8 is a flowchart of a sixth embodiment of a method for playing an advertisement according to the present invention.

This embodiment of the present invention is different from the fifth embodiment of the method for playing an advertisement in that: According to this embodiment of the present invention, a media controller sends content interaction indication information to a terminal when first advertisement play time arrives. A process for the media controller to execute the fifth embodiment of the method for playing an advertisement may include:
Step G1: Receive a program on-demand request sent by a terminal, and obtain an identifier of an on-demand program according to the program on-demand request.
Step G2: Obtain advertisement metadata and advertisement play time that correspond to the identifier of the on-demand program, where the advertisement metadata includes an advertisement identifier of a target advertisement and a content description of the target advertisement, and the advertisement play time includes first advertisement play time.

For the foregoing step G1 and step G2 and the foregoing method for playing an advertisement, reference may be made to step F1 and step F2 in the fourth embodiment, and details are not repeatedly described here.

Step G3: When the first advertisement play time arrives, send the advertisement metadata and the content interaction indication information to the terminal, so that after receiving the content interaction indication information, the terminal sends a fifth selection result according to the target advertisement selected by the user.

Specifically, the media controller sends the advertisement metadata and the content interaction indication information to the terminal through a session initiation protocol message when the first advertisement play time arrives.

After receiving the content interaction indication information, the terminal may present the content description of the target advertisement to the user through an interactive interface, so that the user selects, according to the content description of the target advertisement, the target advertisement to be played, and sends the fifth selection result. The terminal may query the advertisement metadata according to the fifth selection result of the user to obtain a fifth advertisement identifier of the target advertisement that needs to be played for the user.

In addition, the terminal may automatically match a corresponding target advertisement from the advertisement metadata according to the advertisement play indication information of the user to complete the selection of the advertisement content, and send the fifth selection result according to the selection. The advertisement play indication information of the user may be user preference, for example, the user prefers automobile-related advertisements. The terminal may match from the advertisement metadata an advertisement whose content description includes automobile, thus obtaining the target advertisement that needs to be played for the user. The fifth selection result may be the content description of the target advertisement selected by the user, or the advertisement identifier of the target advertisement selected by the user.

Step G4: Receive the fifth selection result sent by the terminal and parse the fifth selection result to obtain a fifth advertisement identifier of the target advertisement that needs to be played for the user.

Specifically, the media controller may receive the fifth selection result sent by the terminal and parse the fifth selection result to obtain the fifth advertisement identifier, where the fifth advertisement identifier may reflect the target advertisement that needs to be played for the user.

Step G5: Send an advertisement play request carrying the fifth advertisement identifier to a media server, so that the media server sends corresponding advertisement content to the terminal according to the fifth advertisement identifier.

Specifically, the media controller may send an advertisement play request to the media server according to the updated advertisement play indication information, where the advertisement play request carries the fifth advertisement identifier of the target advertisement to be played currently.

The media server starts to establish a connection with the terminal, and sends the advertisement content corresponding to the fifth advertisement identifier to the terminal by means of a data stream, and thus the terminal may play the target advertisement selected by the user for the user.

In this embodiment of the present invention, the media controller controls the terminal to play a corresponding advertisement according to the selection result of the user. According to this embodiment of the present invention, the user is enabled to select favorite advertisements for playing, the interactivity and real-time characteristics of the Internet are made full use of, personalized advertisements may be provided for the user, and the advertisements are better targeted and more effective.

In this embodiment of the present invention, the user may select a desired form of an advertisement slot, and the form of the advertisement slot may include a long advertisement slot and a short advertisement slot, where the long advertisement slot means that multiple advertisements are played consecutively in the same advertisement slot, while the short advertisement slot means that multiple advertisements are played separately in different advertisement slots. At this time, the fifth selection result received by the media controller includes a selection result for the form of the advertisement slot, and the media controller parses the fifth selection result to obtain the selection result for the form of the advertisement slot and the fifth advertisement identifier of the target advertisement that needs to be played for the user. The media controller sends an advertisement play request carrying the fifth advertisement identifier to the media server according to the selection result for the form of the advertisement. For example, if the advertisement slot selected by the user is a long advertisement slot, when the first advertisement play time arrives, the media controller sends all advertisement identifiers in the first advertisement identifier to the media server consecutively, so that the media server consecutively sends the advertisement contents corresponding to the first advertisement identifier to the terminal, and thus the terminal may consecutively play the advertisement contents corresponding to the first advertisement identifier in the same advertisement slot. According to this embodiment of the present invention, the advertisement selected by the user may be played according to the advertisement slot selected by the user, requirements of different users may be met, personalized advertisements may be provided for the user, and the advertisements are better targeted and more effective.

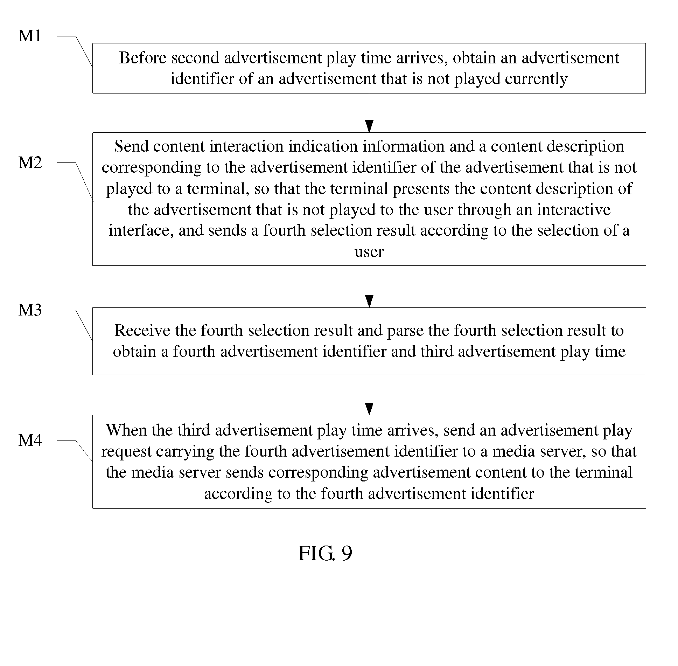

Referring to FIG. 9, FIG. 9 is a flowchart of another method for playing a target advertisement in advance in the method for playing an advertisement according to an embodiment of the present invention.

In this embodiment of the present invention, advertisement play time includes first advertisement play time and second advertisement play time. According to this embodiment of the present invention, the method for a media controller to control a terminal to play the target advertisement in advance mainly includes:
Step M1: Before second advertisement play time arrives, obtain an advertisement identifier of an advertisement that is not played currently.

In this embodiment of the present invention, advertisement play time corresponds to multiple advertisement identifiers which are used for indicating advertisement identifiers of target advertisements to be played when the advertisement play time arrives. Before the second advertisement play time arrives, the terminal may obtain in real time the advertisement identifier of the advertisement that is not played currently.

Step M2: Send content interaction indication information and a content description corresponding to the advertisement identifier of the advertisement that is not played to the terminal, so that the terminal presents the content description of the advertisement that is not played to the user through an interactive interface, and sends a fourth selection result according to the selection of the user.

Step M3: Receive the fourth selection result and parse the fourth selection result to obtain a fourth advertisement identifier and third advertisement play time.

Specifically, a media controller may parse the fourth selection result to obtain the fourth advertisement identifier and the third advertisement play time, where the fourth advertisement identifier is used for identifying the advertisement identifier of the target advertisement that needs to be played for the user in advance, and the third advertisement play time is used for representing time when the advertisement is to be played by the user in advance.

Step M4: When the third advertisement play time arrives, send an advertisement play request carrying the fourth advertisement identifier to a media server, so that the media server sends corresponding advertisement content to the terminal according to the fourth advertisement identifier.

Specifically, when the third advertisement play time arrives, the media controller may send an advertisement play request carrying the fourth advertisement identifier to the media server, so that the media server sends corresponding advertisement content to the terminal according to the fourth advertisement identifier, thus playing in advance the advertisement selected by the user.

It should be noted that the third advertisement play time selected by the terminal may be the second advertisement play time. At this time, when the second advertisement play time arrives, the terminal starts to play the advertisement selected by the user. The user may also not feed back the third advertisement play time, and when the next advertisement play time arrives, the terminal automatically plays the advertisement selected by the user.

In this embodiment of the present invention, the media controller may control the terminal to play the advertisement that needs to be played for the user in advance. According to this embodiment of the present invention, playing sequence of the advertisement may be adjusted according to the selection of the user, and thus personalized requirements of the user may be better met, and the advertisements are better targeted and more effective.

The method for playing an advertisement according to the embodiment of the present invention is described below with reference to another specific application scenario.

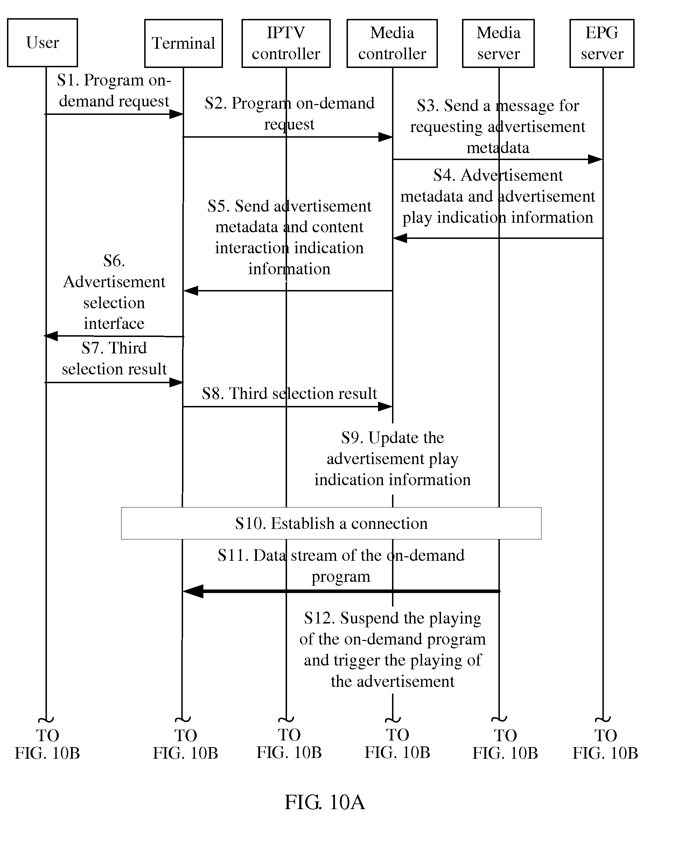

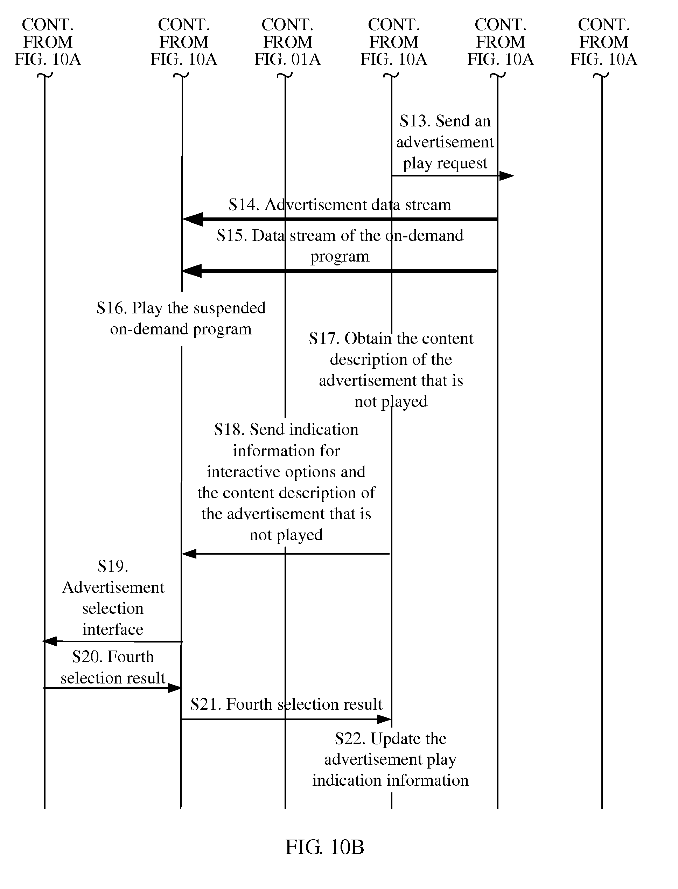

In this application scenario, a video-on-demand system mainly includes: a terminal, an IPTV controller, a media controller, a media server, an ad server, and an electronic program guide server (EPG Server). In this embodiment of the present invention, the terminal may implement an open IPTV terminal function, and the media controller may include a content delivery network controller and a cluster controller (CC, Cluster Controller). Reference may be made to FIG. 10A and FIG. 10B for the procedure of the seventh embodiment of the method for playing an advertisement, which may specifically include the following steps:
Steps S1 to S2: Send a program on-demand request.

A terminal may receive the program on-demand request sent by a user through a remote controller, and the terminal sends the program on-demand request to a media controller.

Steps S3 to S4: The media controller receives the program on-demand request sent by the terminal to obtain advertisement metadata and advertisement play indication information.

Specifically, the media controller may send a message for requesting advertisement metadata to an EPG Server, where the message for requesting the advertisement metadata carries an identifier of an on-demand program, and the EPG Server finds locally, according to the identifier of the on-demand program, the advertisement metadata and the advertisement play indication information that correspond to the current identifier of the on-demand program, and returns the advertisement metadata and the advertisement play indication information. If the EPG Server cannot find locally the advertisement metadata and the advertisement play indication information that correspond to the identifier of the on-demand program, the EPG Server may request the advertisement metadata from an ad server, and after obtaining the advertisement metadata and the advertisement play indication information that correspond to the identifier of the on-demand program, send the advertisement metadata and the advertisement play indication information to the media controller.

The media controller may also send a message for requesting advertisement metadata to the ad server, where the message for requesting the advertisement metadata carries the identifier of the on-demand program, and the ad server finds locally, according to the identifier of the on-demand program, the advertisement metadata and the advertisement play indication information that correspond to the current identifier of the on-demand program, and returns the advertisement metadata and the advertisement play indication information.

In addition, the terminal may also request an IPTV Control through the EPG Server, and the IPTV Control performs a search locally. If the advertisement metadata and the advertisement play indication information are available, the IPTV Control returns the advertisement metadata and the advertisement play indication information; otherwise, the IPTV Control requests the advertisement metadata and the advertisement play indication information from the ad server.

The advertisement metadata may include an advertisement identifier of a target advertisement, a content description of the target advertisement, and SDP information of the target advertisement, and the advertisement play indication information includes the advertisement play time, the advertisement identifier of the target advertisement to be played when the advertisement play time arrives, a form of an advertisement slot, and interaction control information, such as control indication information before playing or control indication information during playing. In this embodiment of the present invention, the advertisement metadata includes the control indication information before playing, which indicates that before playing the on-demand program, the user needs to select the target advertisement to be played. At this time, the terminal executes step S5.

Step S5: Send the advertisement metadata and the content interaction indication information to the terminal.

Specifically, the media controller may send, to the terminal, the content description of the target advertisement, forms of advertisement slots available for selection, and the content interaction indication information.

Steps S6 to S8: Interact through an advertisement interface, and send a third selection result.

Specifically, after receiving the content interaction indication information, the terminal may present the content description of the advertisements available for selection and the forms of advertisement slots available for selection to the user through an interactive selection interface, so that the user equipment sends the third selection result according to the forms of advertisement slots available for selection and the content description of the target advertisement available for selection, where the third selection result includes a selection result for the advertisement content and a selection result for the form of the advertisement slot.

In addition, the terminal may also filter the content description of the target advertisements and parameters for the forms of advertisement slots according to filter conditions of an option filtering module, and then select a suitable advertisement content description for interaction or directly return the selection result. The filter conditions may be a preference setting of the user, for example, the advertisement content preferred by the user is "automobile", and the target advertisements may be filtered according to the preference of the user. The terminal may also save all options of this interaction and the user's selection result for subsequent charging.

In addition, the terminal may also match, according to the user preference, the advertisement corresponding to the user preference from the advertisement metadata, thus sending the third selection result.

Step S9: Update the advertisement play indication information.

Specifically, the media controller may parse the third selection result to obtain the third advertisement identifier of the target advertisement selected by the user and the form of the advertisement slot selected by the user. The media controller may update an advertisement identifier of a preset advertisement in the advertisement play indication information to the third advertisement identifier, and update the form of the advertisement slot in the advertisement play indication information to the form of the advertisement slot selected by the user, and the terminal plays the advertisement according to the updated advertisement play indication information.

Steps S10 to S11: Play the on-demand program.

Specifically, a negotiation process for the playing of the on-demand program is performed between the media controller and the media server. The media server establishes a connection with the terminal, the media server sends a video stream of the on-demand program to the terminal, and the terminal plays the content of the on-demand program.

Step S 12: Suspend the playing of the on-demand program and trigger the playing of the advertisement.

Specifically, when the playing of the content of the program proceeds to the first advertisement play time in the advertisement play indication information, the media controller controls the terminal to suspend the current playing of the on-demand program and to trigger the playing of the advertisement, and step S 13 starts to be executed.

Step S 13: Send an advertisement play request to the media server.

Specifically, the media controller determines, according to the updated advertisement play indication information, the first advertisement identifier of the target advertisement to be played when the first advertisement play time arrives, and sends the advertisement play request carrying the first advertisement identifier to the media server.

Step S 14: Send an advertisement data stream to the terminal.

The media server establishes a connection with the terminal, the media server sends the advertisement data stream to the terminal, and the terminal plays the received advertisement data stream to the user.

Steps S 15 to S16: After the playing of the content of the advertisement is completed, the media controller controls the media server to resume the playing of the suspended on-demand program from a time point at which the content of the program is suspended.

Steps S17 to S18: Obtain a content description of an advertisement that is not played, and send indication information for interactive options and the content description of the advertisement that is not played.

Specifically, before the second advertisement play time arrives, the media controller may obtain, in real time and according to the advertisement play indication information, the advertisement identifier of the advertisement corresponding to the advertisement play time that is not currently triggered, and then send, to the terminal, the content interaction indication information and the content description of the advertisement that is not played and corresponds to the advertisement identifier of the advertisement that is not played currently.

Steps S19 to S20: Interact through the advertisement interface, and send a fourth selection result.

After receiving the content interaction indication information, the terminal may present the content description of the advertisement that is not played to the user through the interactive interface, and the user selects the advertisement to be played in advance and the third advertisement play time according to the interactive interface, and sends the fourth selection result. At this time, the third advertisement play time is time for playing the advertisement in advance. Certainly, instead of selecting the time for playing in advance, the user may set the time for playing in advance to default, for example, playing the advertisement to be played in advance when the next play time arrives.

Steps S21 to 22: Receive the fourth selection result, and update the advertisement play indication information.

Specifically, the media controller may receive the fourth selection result forwarded by the terminal, and parse the fourth selection result to obtain a fourth advertisement identifier of the target advertisement selected by the user. The media controller plays the advertisement by changing the advertisement play time corresponding to the fourth advertisement identifier to the third advertisement play time, or by deleting the fourth advertisement identifier from the advertisement played during the advertisement play time corresponding to the fourth advertisement identifier, and adding new advertisement play time at specified time, where the advertisement content corresponding to the play time is the advertisement content corresponding to the fourth advertisement identifier.

The media controller sends an advertisement play request to the media server according to the updated advertisement play indication information, so that the media server plays a corresponding advertisement according to the fourth advertisement identifier in the advertisement play request, thus playing in advance the advertisement selected by the user. The media controller plays the advertisement according to the updated advertisement play indication information and finally completes the playing of the target advertisement selected by the user.

According to this embodiment of the present invention, the target advertisement selected by the user may be played according to the selection of the user, and playing sequence of the target advertisement may be adjusted according to the user's selection, which can better meet personalized requirements of users and make the advertisements better targeted and more effective.

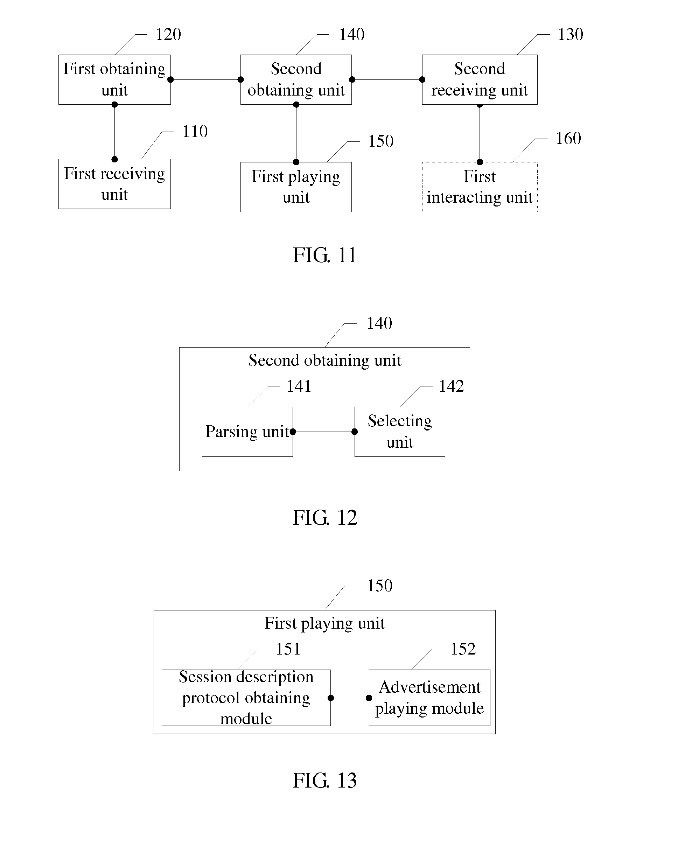

Referring to FIG. 11, FIG. 11 is a schematic diagram of a first embodiment of a terminal according to an embodiment of the present invention.

In this embodiment of the present invention, the terminal mainly includes:
a first receiving unit 110, configured to receive a program on-demand request, and parse the program on-demand request to obtain an identifier of an on-demand program;
a first obtaining unit 120, configured to obtain advertisement metadata and advertisement play time that correspond to program identifier information, where the advertisement metadata includes an advertisement identifier of a target advertisement, and the advertisement play time includes first advertisement play time;
a second receiving unit 130, configured to receive a first selection result sent by a user;
a second obtaining unit 140, configured to obtain, according to the first selection result and the advertisement metadata, a first advertisement identifier of the advertisement that needs to be played for the user; and
a first playing unit 150, configured to play the advertisement according to the updated advertisement play indication information.

In this embodiment of the present invention, the metadata advertisement also includes a content description corresponding to the advertisement identifier of the target advertisement, and the terminal may also include: a first interacting unit 160, configured to present the content description of the target advertisement to the user through an interactive interface, so that the user sends the first selection result according to the content description of the target advertisement.

Referring to FIG. 12, FIG. 12 is a schematic diagram of a second obtaining unit in the terminal according to an embodiment of the present invention.

In this embodiment of the present invention, the advertisement metadata also includes the content description corresponding to the advertisement identifier of the target advertisement, and the second obtaining unit 140 may include:
a parsing module 141, configured to parse the first selection result to obtain the advertisement play indication information of the user; and
a selecting module 142, configured to select, from the advertisement metadata, the first advertisement identifier of the advertisement corresponding to the advertisement play indication information.

Referring to FIG. 13, FIG. 13 is a schematic diagram of a first playing unit in the terminal according to an embodiment of the present invention.

The first playing unit 150 in this embodiment of the present invention may include:
a session description protocol obtaining module 151, configured to obtain session description protocol information of the advertisement corresponding to the first advertisement identifier; and
an advertisement playing module 152, configured to obtain an advertisement data stream according to the session description protocol information and play the advertisement data stream.

The first embodiment of the terminal of the present invention may be used in the first embodiment of the foregoing corresponding method for playing an advertisement. In this embodiment of the present invention, the terminal may obtain, according to the first selection result of the user, the first advertisement identifier of the advertisement that needs to be played for the user, and thus play, according to the first advertisement identifier, the advertisement that needs to be played for the user. According to this embodiment of the present invention, the user is enabled to select favorite advertisements for playing, the interactivity and real-time characteristics of the Internet are made full use of, personalized advertisements may be provided for the user, and the advertisements are better targeted and more effective.

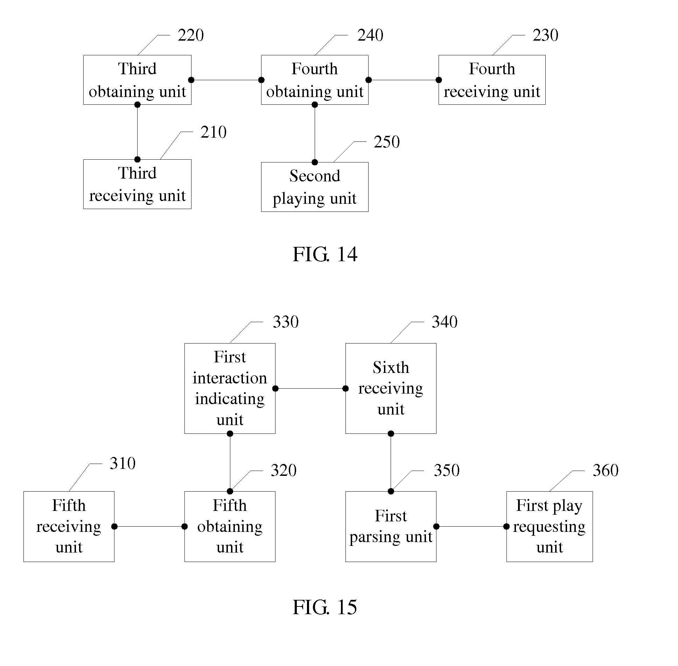

Referring to FIG. 14, FIG. 14 is a schematic diagram of a second embodiment of a terminal according to an embodiment of the present invention.

This embodiment of the terminal of the present invention may include:
a third receiving unit 210, configured to receive a program on-demand request, and obtain program identifier information according to the program on-demand request;
a third obtaining unit 220, configured to obtain advertisement metadata and advertisement play time that correspond to the program identifier information, where the advertisement metadata includes an advertisement identifier of a target advertisement, and the advertisement play time includes first advertisement play time;
a fourth receiving unit 230, configured to receive a first selection result sent by a user when the first advertisement play time arrives;
a fourth obtaining unit 240, configured to obtain, according to the first selection result and the advertisement metadata, a first advertisement identifier of the advertisement that needs to be played for the user; and
a second playing unit 250, configured to play the advertisement corresponding to the first advertisement identifier when the first advertisement play time arrives.

The second embodiment of the terminal of the present invention may be used in the second embodiment of the foregoing corresponding method for playing an advertisement. In this embodiment of the present invention, the terminal may obtain, according to the first selection result of the user, the first advertisement identifier of the advertisement that needs to be played for the user, and thus play the advertisement that needs to be played for the user. According to this embodiment of the present invention, the user is enabled to select favorite advertisements for playing, the interactivity and real-time characteristics of the Internet are made full use of, personalized advertisements may be provided for the user, and the advertisements are better targeted and more effective.

Referring to FIG. 15, FIG. 15 is a schematic diagram of a first embodiment of a media controller according to an embodiment of the present invention.

In this embodiment of the present invention, the media controller may include:
a fifth receiving unit 310, configured to receive a program on-demand request sent by a terminal, and obtain an identifier of an on-demand program according to the program on-demand request;
a fifth obtaining unit 320, configured to obtain advertisement metadata and advertisement play time that correspond to the identifier of the on-demand program, where the advertisement metadata includes an advertisement identifier of a target advertisement and a content description of the target advertisement, and the advertisement play time includes first advertisement play time;
a first interaction indicating unit 330, configured to send the advertisement metadata and content interaction indication information to the terminal, so that after receiving the content interaction indication information, the terminal sends a third selection result according to the target advertisement selected by the user;
a sixth receiving unit 340, configured to receive the third selection result sent by the terminal;
a first parsing unit 350, configured to parse the third selection result to obtain a third advertisement identifier of the target advertisement selected by the user; and
a first play requesting unit 360, configured to send an advertisement play request carrying the third advertisement identifier to a media server when the first advertisement play time arrives, so that the media server sends corresponding advertisement content to the terminal according to the third advertisement identifier.

The first embodiment of the media controller may be used in the fifth embodiment of the foregoing method for playing an advertisement. In this embodiment of the present invention, the media controller controls the terminal to play a corresponding advertisement according to the selection result of the user. According to this embodiment of the present invention, the user is enabled to select favorite advertisements for playing, the interactivity and real-time characteristics of the Internet are made full use of, personalized advertisements may be provided for the user, and the advertisements are better targeted and more effective.

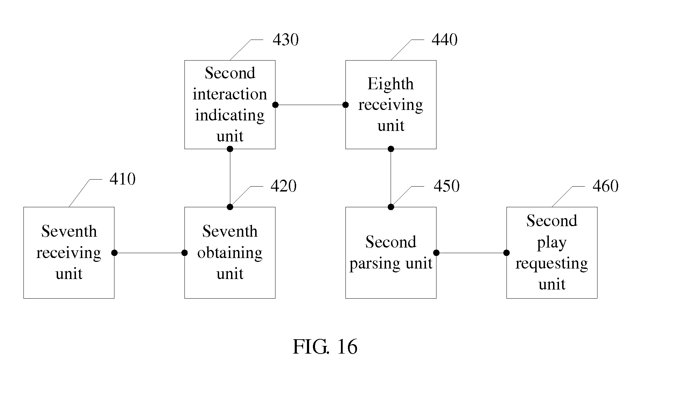

Referring to FIG. 16, FIG. 16 is a schematic diagram of a second embodiment of a media controller according to an embodiment of the present invention.

In this embodiment of the present invention, the media controller may include:
a seventh receiving unit 410, configured to receive a program on-demand request sent by a terminal, and obtain an identifier of an on-demand program according to the program on-demand request;
a seventh obtaining unit 420, configured to obtain advertisement metadata and advertisement play time that correspond to the identifier of the on-demand program, where the advertisement metadata includes an advertisement identifier of a target advertisement and a content description of the target advertisement, and the advertisement play time includes first advertisement play time;
a second interaction indicating unit 430, configured to send the advertisement metadata and content interaction indication information to the terminal when the first advertisement play time arrives, so that after receiving the content interaction indication information, the terminal sends a fifth selection result according to the target advertisement selected by the user;
an eighth receiving unit 440, configured to receive the fifth selection result sent by the terminal;
a second parsing unit 450, configured to parse the fifth selection result to obtain a fifth advertisement identifier of the target advertisement selected by the user; and
a second play requesting unit 460, configured to send an advertisement play request carrying the fifth advertisement identifier to a media server, so that the media server sends corresponding advertisement content to the terminal according to the fifth advertisement identifier.

The second embodiment of the media controller may be used in the sixth embodiment of the foregoing method for playing an advertisement. In this embodiment of the present invention, the media controller controls the terminal to play a corresponding advertisement according to the selection result of the user. According to this embodiment of the present invention, the user is enabled to select favorite advertisements for playing, the interactivity and real-time characteristics of the Internet are made full use of, personalized advertisements may be provided for the user, and the advertisements are better targeted and more effective.

Detailed above are the method for playing an advertisement, the terminal, and the media controller according to the present invention. Persons of ordinary skill in the art may make modifications or variations to the specific implementation modes and application scopes according to the ideas of the embodiments of the present invention. Therefore, the specification shall not be construed as a limitation on the present invention.

## Claims

1. A method for playing an advertisement, comprising:
receiving a program on-demand request, and obtaining program identifier information according to the program on-demand request;
obtaining advertisement metadata and advertisement play time that correspond to the program identifier information, wherein the advertisement metadata comprises an advertisement identifier of a target advertisement, and the advertisement play time comprises first advertisement play time;
receiving a first selection result sent by a user, and obtaining, according to the first selection result and the advertisement metadata, a first advertisement identifier of an advertisement that needs to be played for the user; and
when the first advertisement play time arrives, playing the advertisement corresponding to the first advertisement identifier.

2. The method according to claim 1, wherein the advertisement metadata further comprises a content description corresponding to the advertisement identifier of the target advertisement, and between the obtaining the advertisement metadata corresponding to the program identifier information and the receiving the first selection result sent by the user, the method further comprises:
presenting the content description of the target advertisement to the user through an interactive interface, so that the user sends the first selection result according to the content description of the target advertisement.

3. The method according to claim 1, wherein the advertisement metadata further comprises a content description corresponding to the advertisement identifier of the target advertisement, and the obtaining, according to the first selection result and the advertisement metadata, the first advertisement identifier of the advertisement that needs to be played for the user comprises:
parsing the first selection result to obtain advertisement play indication information of the user; and
selecting, from the advertisement metadata, the first advertisement identifier of the advertisement corresponding to the advertisement play indication information.

4. The method according to claim 1, wherein the obtaining, according to the first selection result and the advertisement metadata, the first advertisement identifier of the advertisement that needs to be played for the user comprises:
obtaining, according to the first selection result and the advertisement metadata, the first advertisement identifier of the advertisement that needs to be played for the user and a form of an advertisement slot selected by the user; and
the playing the advertisement corresponding to the first advertisement identifier when the first advertisement play time arrives comprises:
when the first advertisement play time arrives, playing the advertisement corresponding to the first advertisement identifier according to the form of the advertisement slot selected by the user.

5. The method according to claim 1, wherein the advertisement play time further comprises second advertisement play time, the advertisement metadata comprises a content description corresponding to the advertisement identifier of the target advertisement, and after the playing the advertisement corresponding to the first advertisement identifier, the method further comprises:
before the second advertisement play time arrives, obtaining an advertisement identifier of an advertisement that is not played currently;
presenting the content description corresponding to the advertisement identifier of the advertisement that is not played to the user through an interactive interface, so that the user sends a second selection result according to the content description of the advertisement that is not played;
receiving the second selection result and parsing the second selection result to obtain a second advertisement identifier and third advertisement play time; and
when the third advertisement play time arrives, playing an advertisement corresponding to the second advertisement identifier.

6. The method according to claim 1 or 2, wherein the playing the advertisement corresponding to the first advertisement identifier comprises:
obtaining session description protocol information of the advertisement corresponding to the first advertisement identifier; and
obtaining an advertisement data stream according to the session description protocol information and playing the advertisement data stream.

7. The method according to claim 1 or 2, wherein the obtaining the advertisement metadata and the advertisement play time that correspond to the identifier of the on-demand program comprises:
sending a message for requesting the advertisement metadata to an advertisement server or an electronic program guide server, wherein the message for requesting the advertisement metadata carries the identifier of the on-demand program; and
receiving the advertisement metadata and the advertisement play time that correspond to the identifier of the on-demand program and are sent by the advertisement server or the electronic program guide server.

8. A method for playing an advertisement, comprising:
receiving a program on-demand request, and obtaining program identifier information according to the program on-demand request;
obtaining advertisement metadata and advertisement play time that correspond to the program identifier information, wherein the advertisement metadata comprises an advertisement identifier of a target advertisement, and the advertisement play time comprises first advertisement play time;
when the first advertisement play time arrives, receiving a first selection result sent by a user, and obtaining, according to the first selection result and the advertisement metadata, a first advertisement identifier of an advertisement that needs to be played for the user; and
playing the advertisement corresponding to the first advertisement identifier.

9. The method according to claim 8, wherein the advertisement metadata further comprises a content description corresponding to the advertisement identifier of the target advertisement, and the method further comprises:
when the first advertisement play time arrives, presenting the content description of the target advertisement to the user through an interactive interface, so that the user sends the first selection result according to the content description of the target advertisement.

10. The method according to claim 8, wherein the advertisement metadata further comprises a content description corresponding to the advertisement identifier of the target advertisement, and the obtaining, according to the first selection result and the advertisement metadata, the first advertisement identifier of the advertisement that needs to be played for the user comprises:
parsing the first selection result to obtain advertisement play indication information of the user; and
selecting, from the advertisement metadata, the first advertisement identifier of the advertisement corresponding to the advertisement play indication information.

11. The method according to claim 8, wherein the playing the target advertisement corresponding to the first advertisement identifier comprises:
obtaining session description protocol information of the advertisement corresponding to the first advertisement identifier; and
obtaining an advertisement data stream according to the session description protocol information and playing the advertisement data stream.

12. The method according to claim 8, wherein the advertisement play time further comprises second advertisement play time, the advertisement metadata further comprises a content description corresponding to the advertisement identifier of the target advertisement, and after the playing the advertisement corresponding to the first advertisement identifier, the method further comprises:
before the second advertisement play time arrives, obtaining an advertisement identifier of an advertisement that is not played currently;
presenting a content description corresponding to the advertisement identifier of the advertisement that is not played to the user through an interactive interface, so that the user sends a second selection result according to the content description of the advertisement that is not played;
receiving the second selection result and parsing the second selection result to obtain a second advertisement identifier and third advertisement play time; and
when the third advertisement play time arrives, playing an advertisement corresponding to the second advertisement identifier.

13. A method for playing an advertisement, comprising:
receiving a program on-demand request sent by a terminal, and parsing the program on-demand request to obtain an identifier of an on-demand program;
obtaining advertisement metadata and advertisement play time that correspond to the identifier of the on-demand program, wherein the advertisement metadata comprises an advertisement identifier of a target advertisement and a content description of the target advertisement, and the advertisement play time comprises first advertisement play time;
sending the advertisement metadata and content interaction indication information to the terminal, so that after receiving the content interaction indication information, the terminal sends a third selection result according to a target advertisement selected by a user;
receiving the third selection result sent by the terminal and parsing the third selection result to obtain a third advertisement identifier of the target advertisement selected by the user; and
when the first advertisement play time arrives, sending an advertisement play request carrying the third advertisement identifier to a media server, so that the media server sends corresponding advertisement content to the terminal according to the third advertisement identifier.

14. The method according to claim 13, wherein the parsing the third selection result to obtain the third advertisement identifier of the advertisement that needs to be played for the user comprises:
parsing the third selection result to obtain a selection result for a form of an advertisement slot and the third advertisement identifier of the advertisement that needs to be played for the user; and
the sending the advertisement play request carrying the third advertisement identifier to the media server when the first advertisement play time arrives comprises:
when the first advertisement play time arrives, sending the advertisement play request carrying the third advertisement identifier to the media server according to the selection result for the form of the advertisement.

15. The method according to claim 13, wherein the advertisement play time further comprises second advertisement play time, and after the sending the advertisement play request carrying the third advertisement identifier to the media server, the method further comprises:
before the second advertisement play time arrives, obtaining an advertisement identifier of an advertisement that is not played currently;
sending the content interaction indication information and a content description corresponding to the advertisement identifier of the advertisement that is not played to the terminal, so that the terminal presents the content description of the advertisement that is not played to the user through an interactive interface and sends a fourth selection result according to selection of the user;
receiving the fourth selection result sent by the terminal and parsing the fourth selection result to obtain a fourth advertisement identifier and third advertisement play time; and
when the third advertisement play time arrives, sending an advertisement play request carrying the fourth advertisement identifier to the media server, so that the media server sends corresponding advertisement content to the terminal according to the fourth advertisement identifier.

16. A method for playing an advertisement, comprising:
receiving a program on-demand request sent by a terminal, and parsing the program on-demand request to obtain an identifier of an on-demand program;
obtaining advertisement metadata and advertisement play time that correspond to the identifier of the on-demand program, wherein the advertisement metadata comprises an advertisement identifier of a target advertisement and a content description of the target advertisement, and the advertisement play time comprises first advertisement play time;
when the first advertisement play time arrives, sending the advertisement metadata and content interaction indication information to the terminal, so that after receiving the content interaction indication information, the terminal sends a fifth selection result according to a target advertisement selected by a user;
receiving the fifth selection result sent by the terminal and parsing the fifth selection result to obtain a fifth advertisement identifier of the target advertisement selected by the user; and
sending an advertisement play request carrying the fifth advertisement identifier to a media server, so that the media server sends corresponding advertisement content to the terminal according to the fifth advertisement identifier.

17. The method according to claim 16, wherein the parsing the fifth selection result to obtain the fifth advertisement identifier comprises:
parsing the fifth selection result to obtain a selection result for a form of an advertisement slot and the fifth advertisement identifier; and
the sending the advertisement play request carrying the fifth advertisement identifier to the media server comprises:
sending the advertisement play request carrying the fifth advertisement identifier to the media server according to the selection result for the form of the advertisement slot.

18. The method according to claim 16, wherein the advertisement play time further comprises second advertisement play time, and after the sending the advertisement play request carrying the fifth advertisement identifier to the media server, the method further comprises:
before the second advertisement play time arrives, obtaining an advertisement identifier of an advertisement that is not played currently;
sending the content interaction indication information and a content description corresponding to the advertisement identifier of the advertisement that is not played to the terminal, so that the terminal presents the content description of the advertisement that is not played to the user through an interactive interface and sends a sixth selection result according to selection of the user;
receiving the sixth selection result sent by the terminal and parsing the sixth selection result to obtain a sixth advertisement identifier and third advertisement play time; and
when the third advertisement play time arrives, sending an advertisement play request carrying the sixth advertisement identifier to the media server, so that the media server sends corresponding advertisement content to the terminal according to the sixth advertisement identifier.

19. A terminal, comprising:
a first receiving unit, configured to receive a program on-demand request, and obtain program identifier information according to the program on-demand request;
a first obtaining unit, configured to obtain advertisement metadata and advertisement play time that correspond to the program identifier information, wherein the advertisement metadata comprises an advertisement identifier of a target advertisement, and the advertisement play time comprises first advertisement play time;
a second receiving unit, configured to receive a first selection result sent by a user;
a second obtaining unit, configured to obtain, according to the first selection result and the advertisement metadata, a first advertisement identifier of an advertisement that needs to be played for the user; and
a first playing unit, configured to play the advertisement corresponding to the first advertisement identifier when the first advertisement play time arrives.

20. The terminal according to claim 19, wherein the advertisement metadata further comprises a content description corresponding to the advertisement identifier of the target advertisement, and the terminal further comprises:
a first interacting unit, configured to present the content description of the target advertisement to the user through an interactive interface, so that the user sends the first selection result according to the content description of the target advertisement.

21. The terminal according to claim 19, wherein the advertisement metadata further comprises a content description corresponding to the advertisement identifier of the target advertisement, and the second obtaining unit comprises:
a parsing module, configured to parse the first selection result to obtain advertisement play indication information of the user; and
a selecting module, configured to select, from the advertisement metadata, the first advertisement identifier of the advertisement corresponding to the advertisement play indication information.

22. The terminal according to claim 19, wherein the first playing unit comprises:
a session description protocol obtaining module, configured to obtain session description protocol information of the advertisement corresponding to the first advertisement identifier; and
an advertisement playing module, configured to obtain an advertisement data stream according to the session description protocol information and play the advertisement data stream.

23. A terminal, comprising:
a third receiving unit, configured to receive a program on-demand request, and obtain program identifier information according to the program on-demand request;
a third obtaining unit, configured to obtain advertisement metadata and advertisement play time that correspond to the program identifier information, wherein the advertisement metadata comprises an advertisement identifier of a target advertisement, and the advertisement play time comprises first advertisement play time;
a fourth receiving unit, configured to receive a first selection result sent by a user when the first advertisement play time arrives;
a fourth obtaining unit, configured to obtain, according to the first selection result and the advertisement metadata, a first advertisement identifier of an advertisement that needs to be played for the user; and
a second playing unit, configured to play the advertisement corresponding to the first advertisement identifier when the first advertisement play time arrives.

24. A media controller, comprising:
a fifth receiving unit, configured to receive a program on-demand request sent by a terminal, and parse the program on-demand request to obtain an identifier of an on-demand program;
a fifth obtaining unit, configured to obtain advertisement metadata and advertisement play time that correspond to the identifier of the on-demand program, wherein the advertisement metadata comprises an advertisement identifier of a target advertisement and a content description of the target advertisement, and the advertisement play time comprises first advertisement play time;
a first interaction indicating unit, configured to send the advertisement metadata and content interaction indication information to the terminal, so that after receiving the content interaction indication information, the terminal sends a third selection result according to a target advertisement selected by a user;
a sixth receiving unit, configured to receive the third selection result sent by the terminal;
a first parsing unit, configured to parse the third selection result to obtain a third advertisement identifier of the target advertisement selected by the user; and
a first play requesting unit, configured to send an advertisement play request carrying the third advertisement identifier to a media server when the first advertisement play time arrives, so that the media server sends corresponding advertisement content to the terminal according to the third advertisement identifier.

25. A media controller, comprising:
a seventh receiving unit, configured to receive a program on-demand request sent by a terminal, and parse the program on-demand request to obtain an identifier of an on-demand program;
a seventh obtaining unit, configured to obtain advertisement metadata and advertisement play time that correspond to the identifier of the on-demand program, wherein the advertisement metadata comprises an advertisement identifier of a target advertisement and a content description of the target advertisement, and the advertisement play time comprises first advertisement play time;
a second interaction indicating unit, configured to send the advertisement metadata and content interaction indication information to the terminal when the first advertisement play time arrives, so that after receiving the content interaction indication information, the terminal sends a fifth selection result according to a target advertisement selected by a user;
an eighth receiving unit, configured to receive the fifth selection result sent by the terminal;
a second parsing unit, configured to parse the fifth selection result to obtain a fifth advertisement identifier of the target advertisement selected by the user; and
a second play requesting unit, configured to send an advertisement play request carrying the fifth advertisement identifier to a media server, so that the media server sends corresponding advertisement content to the terminal according to the fifth advertisement identifier.
